# EUROPÄISCHE PATENTSCHRIFT

(11) **EP 1 334 224 B1**
(45) Veröffentlichungstag und Bekanntmachung des Hinweises auf die Patenterteilung: **18.08.2004**
(21) Anmeldenummer: 01989444.3
(22) Anmeldetag: 08.11.2001
(51) Int. Cl.: D04B 1/16, D04B 21/16, B60R 13/02, D06N 7/00

(54) **VERFAHREN ZUR HERSTELLUNG EINES VERKLEIDUNGSMATERIALS FÜR KRAFTFAHRZEUGE**
METHOD FOR PRODUCING A LINING MATERIAL FOR MOTOR VEHICLES
PROCEDE DE PRODUCTION D'UNE MATIERE D'HABILLAGE POUR AUTOMOBILES

(30) Priorität: 08.11.2000 DE 10055313
(43) Veröffentlichungstag der Anmeldung: 13.08.2003
(73) Patentinhaber: Finke, Heiner, 54292 Trier (DE)
(72) Erfinder: Finke, Heiner, 54292 Trier (DE)
(74) Vertreter: von Puttkamer, Nikolaus, Dipl.-Ing.
(86) Internationale Anmeldenummer: PCT/EP2001/012948
(87) Internationale Veröffentlichungsnummer: WO 2002/038845

(56) Entgegenhaltungen:
- EP-A- 0 305 094
- EP-A- 0 728 859
- DE-A- 2 915 302
- DE-A- 19 545 596

## Beschreibung

Die vorliegende Erfindung betrifft ein Verfahren zur Herstellung eines Verkleidungsmaterials für Kraftfahrzeuge, insbesondere zum Verkleidung des Himmels, der Säulen oder der Hutablage eines Kraftfahrzeuges, nach dem Oberbegriff des Patentanspruches 1. Ein einschlägiges Verfahren wird in der EP-A-O 728 859 beschrieben.

Üblicherweise werden Verkleidungsmaterialien für Kraftfahrzeughimmel dadurch hergestellt, dass nach der Herstellung des Garnes (Schritt 1) oder dem Bezug des fertig hergestellten Garnes das Garn am Ort der Herstellung des Verkleidungsmaterials in einem Verfahrensschritt 2 gewirkt wird, wie dies die Figur 1a zeigt. Nachfolgend wird in einem weiteren Verfahrensschritt 3 das Gewirke am Ort der Herstellung des Verkleidungsmaterials gefärbt (Schritt 3). Auch ein Färben des rohweißen Garnes am Herstellungsort des Verkleidungsmaterials vor dem Wirken ist denkbar aber selten. Es handelt sich dabei um eine sogeneannte Spulenfärbung. In einem weiteren Schritt 4 wird das gewirkte und gefärbte Garn gerauht. Dadurch wird erreicht, dass insbesondere zur Gewichtsersparung Verkleidungsmaterialien geschlossen erscheinen, die mit relativ wenig Maschen gewirkt sind.

In einem nachfolgenden Fixierschritt 5 werden die soweit hergestellten Verkleidungsmaterialien durch eine Thermostablisierung fixiert. Hierzu durchlaufen die flächigen Verkleidungsmaterialien beispielsweise ein Hitzefeld einer Temperatur von etwa 170 bis 190 °C, wobei sie durch Dehnen bzw. Zusammenschieben auf das richtige Endmaß gebracht werden, das dann nach dem Abkühlen bestehen bleibt.

In einem weiteren Verfahrensschritt 6 wird an einer Seite des fixierten Verkleidungsmaterials bei der Herstellung eines Fahrzeughimmels durch Flammkaschieren eine vorzugsweise farblich angepaßte Schaumstoffschicht aufkaschiert. Nachfolgend wird in einem weiteren Verfahrensschritt 7 die dem Fahrzeughimmel zugewandte Seite der Schaumschicht auf einem Formhimmel aufkaschiert.

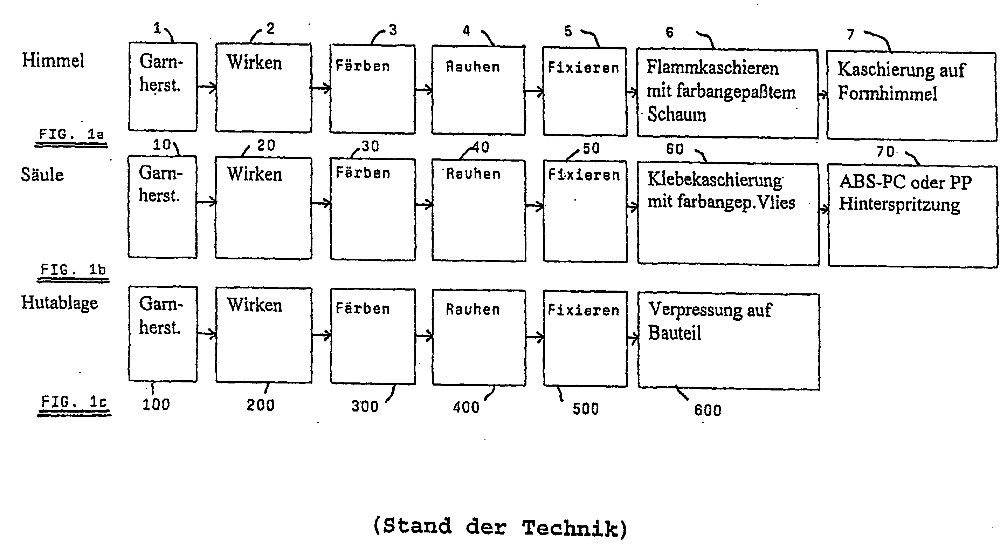

Die Figur 1b zeigt die bekannte Herstellung von Fahrzeugsäulen. Die Verfahrensschtritte 10, 20, 30, 40 und 50 entsprechen den im Zusammenhang mit der Figur 1a beschriebenen Schritten 1 bis 5. Die fixierten Verkleidungsmaterialien werden durch Klebekaschieren (Schritt 60) auf einer Seite eines vorzugsweise farblich angepaßten Vliesmaterials befestigt. Nachfolgend wird bekannterweise eine ABS-PC oder eine PP-Hinterspritzung (Schritt 70) vorgenommen.

Die Figur 1c zeigt die Herstellung einer Hutablage, wobei die Schritte 100, 200, 300, 400 und 500 den Schritten 1 bis 5 der Figur 1a entsprechen. Nach dem Fixieren erfolgt beim Schritt 600 das Verpressen des fixierten Verkleidungsmaterials auf dem entsprechenden Bauteil, wobei auf diesem eine Klebeschicht aufgetragen oder aufgesprüht wird.

Die Aufgabe der vorliegenden Erfindung besteht ausgehend von der bekannten Vorgehensweise, die zuvor erläutert wurde, darin ein Verfahren zur Herstellung eines Verkleidungsmaterials für Kraftfahrzeuge, insbesondere zum Verkleiden des Himmels, der Säulen oder der Hutablage eines Kraftfahrzeuges, zu schaffen, das bei einem vergleichsweise leichten Gewicht eine gute Strukturoptik bzw. -haptik aufweist und relativ kostengünstig herstellbar ist.

Diese Aufgabe wird durch ein Verfahren zur Herstellung von Verkleidungsmaterialien mit den Merkmalen des Patentanspruches 1 gelöst.

Der wesentliche Vorteil der vorliegenden Erfindung besteht darin, dass durch die Verwendung eines direkt bei der Garnherstellung durch Spinnfärben gefärbten Garnes die beim Stand der Technik erforderlichen Färbeschritte entfallen können. Dadurch können Kosten eingespart werden und können insbesondere die die Umwelt belastenden Färbeschritte entfallen, die beim Stand der Technik am Ort der Herstellung des Verkleidungsmaterials zum Färben des bereits gewirkten Materials oder gegebenenfalls nach der Herstellung des rohweißen Garnes bei einer sogenannte Spulenfärbung ausgeführt werden. Erfindungsgemäß wird der bei der Herstellung entstehende Farbumschlag ermittelt und durch Variieren der Farbgebung bei der Garnherstellung kompensiert, damit das Endprodukt den gewünschten Farbten aufweist. Durch die Verwendung von relativ feinen, spinngefärbten Garnen kann eine geschlossene Oberflächenstruktur auch schon in einem Gewichtsbereich von 80 bis 100 g pro Quadratmeter erzielt werden. Die aufwendigen Rauhschritte können entfallen.

Dadurch, dass die Färbeschritte, bei denen das gewirkte Material beispielsweise durch Tauchen gefärbt wird, und die Rauhschritte entfallen können, können auch aufwendige Maschinen bzw. Anlagen zum Färben und Rauhen eingespart werden. Dies ist mit erheblichen Kosteneinsparungen verbunden. Zudem kann die Energie eingespart werden, die zum Betrieb derartiger Färbe- und Rauhanlagen erforderlich ist.

Insbesondere lassen sich nach dem erfindungsgemäßen Verfahren Verkleidungsmaterialien, insbesondere für Fahrzeughimmel, Fahrzeugsäulen und Hutablagen, herstellen.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
- Figur 1a: ein Blockschaltbild eines bekannten Verfahrens zur Herstellung eines Verkleidungsmaterials für einen Fahrzeughimmel;
- Figur 1b: ein Blockschaltbild zur Erläutertung eines bekannten Verfahrens zur Herstellung eines Verkleidungsmaterials für Fahrzeugsäulen;
- Figur 1c: ein Blockschaltbild zur Erläutertung eines bekannten Verfahrens zur Herstellung eines Verkleidungsmaterials für eine Hutablage;
- Figur 2a: ein Blockschaltbild zur Erläuterung eines erfindungsgemäßen Verfahrens zur Herstellung eines Verkleidungsmaterials für Fahrzeughimmel;
- Figur 2b: ein Blockschaltbild zur Erläuterung eines erfindungsgemäßen Verfahrens zur Herstellung eines Verkleidungsmaterials für Fahrzeugsäulen und
- Figur 2c: ein Blockschaltbild zur Erläuterung eines erfindungsgemäßen Verfahrens zur Herstellung eines Verkleidungsmaterials für Hutablagen eines Fahrzeuges.

Gemäß der Figur 2a wird zur Herstellung eines Verkleidungsmaterials für einen Fahrzeughimmel nach dem vorliegenden Verfahren von einem bereits gefärbten Garn ausgegangen, das beim Schritt 1' zur Garnherstellung gleichzeitig auch gefärbt wurde. Dabei kann der Schritt 1' zur Garnherstellung am Ort des Herstellers des Verkleidungsmaterials ausgeführt werden oder es kann das nach bestimmten Vorgaben des Herstellers des Verkleidungsmaterials bereits gefärbte Garn beim Garnhersteller fertig bezogen werden.

In einem nachfolgenden Schritt 2' wird das spinngefärbte Garn gewirkt oder gestrickt. Danach wird im weiteren Schritt 3' das beim Schritt 2' gewirkte oder gestrickte Material fixiert, wobei dieser Schritt 3' zum Fixieren dem eingangs erläuterten Schritt 5 zum Fixieren entspricht. Anschließend wird entsprechend dem eingangs erläuterten Schritt 6 beim Schritt 4' das beim Schritt 3' fixierte Material mit einem farbangepaßten Schaum flammkaschiert und wird bei einem nachfolgenden Schritt 5' das beim Schritt 4' flammkaschierte Material auf einem Formhimmel kaschiert. Der Schritt 5' entspricht dem bekannten Schritt 7.

Bei der Herstellung eines Verkleidungsmaterials für eine Fahrzeugsäule entsprechen die Schritte 10', 20' und 30' den zuvor erläuterten Schritten 1', 2' und 3' und entsprechen die Schritte 40' und 50' den eingangs erläuterten Schritten 60 und 70.

Bei der Herstellung eines Verkleidungsmaterials für eine Hutablage entsprechen die Schritte 100', 200' und 300' den zuvor erläuterten Schritten 1', 2' und 3' und entspricht der Schritt 400' dem eingangs erläuterten Schritt 600.

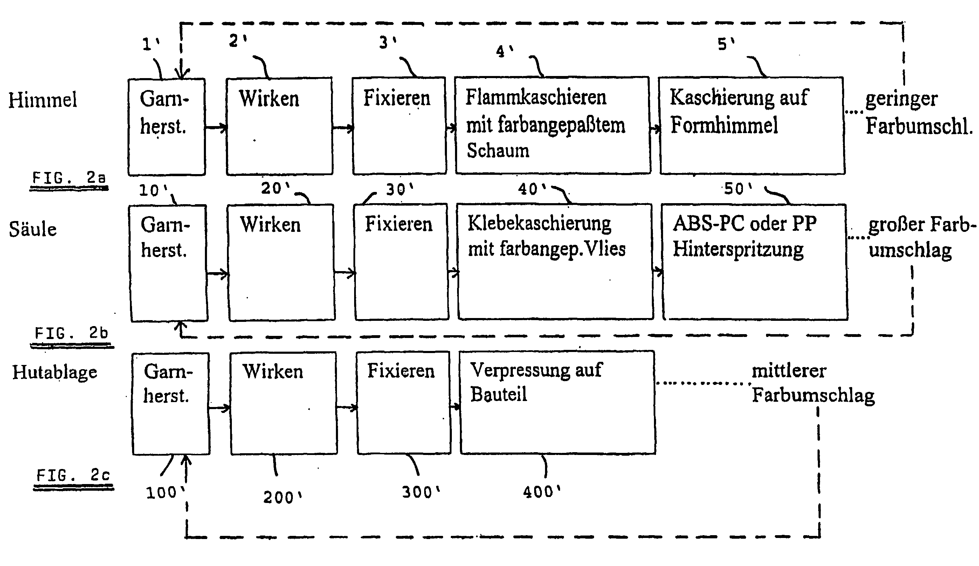

Es ist erkennbar, dass bei dem erfindungsgemäßen Verfahren gemäß den Figuren 2a, 2b und 2c jeweils die Schritte 3 und 4 bzw. 30 und 40 bzw. 300 und 400 der bekannten Verfahren der Figuren 1a, 1b und 1c eingespart werden. Dadurch ergeben sich die eingangs genannten Vorteile der energiesparenden und kostengünstigeren Herstellung, wobei gleichzeitig eine Gewichtsreduzierung erreichbar ist, weil von einem feineren Garn ausgegangen wird, das bereits bei seiner Herstellung (Schritte 1', 10', 100') bereits gefärbt wurde. Wegen des feineren Garns, das einen Garntiter aufweist, der gleich oder kleiner als 76 und vorzugsweise größer als 50 ist, wird ein relativ geringes Gewicht von 80 bis 120 g pro Quadratmeter realisiert, wobei gleichzeitig wegen des feinen Garns ein Rauhen nicht erforderlich ist, da das feine, gewirkte bzw. gestrickte Garn selbst schon eine geschlossene Oberfläche bewirkt. Der beispielsweise bei den Kaschierungsschritten 4' und 40' am Verkleidungsmaterial angebrachte Schaum oder das angebrachte Vlies sind bei einer solchen geschlossenen Fläche durch das Verkleidungsmaterial hindurch nicht sichtbar. Dies gilt beim Schritt 400' auch für das Bauteil, auf dem das Verkleidungsmaterial verpresst wird.

Beim erfindungsgemäßen Verfahren ergibt sich beim Schritt 4' des Flammkaschierens bzw. beim Schritt 40' des Klebekaschierens der Vorteil, dass wegen der Verwendung des feineren Garnes die Anzahl der Befestigungs- bzw. Klebepunkte pro Flächeneinheit größer ist, sodass sie eine bessere Haftung des kaschierten Schaumes bzw. Vlieses ergibt.

In den Figuren 2a, 2b und 2c ist angegeben, dass sich bei der Herstellung eines Verkleidungsmaterials für einen Fahrzeughimmel üblicherweise ein geringer Farbumschlag, bei der Herstellung eines Verkleidungsmaterials für eine Fahrzeugsäule ein verhältnismäßig großer Farbumschlag und bei der Herstellung einer Hutablage ein mittlerer Farbumschlag ergeben. Entsprechend diesen Farbumschlägen, die auf die Schritte 2' bis 5' bzw. 20' bis 50' bzw. 200' bis 400' zurückzuführen sind, können die Vorgaben bezüglich der Farbgebung bei der Garnherstellung bei den Schritten 1', 10' bzw. 100' entsprechend variiert werden, sodass das Verkleidungsmaterial nach den Schritten 5' bzw. 50' bzw. 400' genau den gewünschten Farbton aufweist. In den Figuren 2a, 2b und 2c ist diese Einflußnahme auf das vorliegende Verfahren durch die unterbrochenen Linien dargestellt.

## Patentansprüche

1. Verfahren zur Herstellung eines Verkleidungsmaterials für Kraftfahrzeuge, bei dem aus einem bereits spinngefärbten Garn (Schritt 1') ein Gewirke oder Gestricke hergestellt wird (Schritt 2'), das Gewirke oder Gestricke fixiert wird (Schritt 3') und das fixierte Gewirke oder Gestricke auf einem Untergrund angeordnet wird (Schritt 4'), **dadurch gekennzeichnet, dass** danach ein entstandener Farbumschlag ermittelt und durch Variieren der Farbgebung bei der Garnherstellung (Schritt 10') kompensiert wird.

2. Verfahren nach Anspruch 1, **dadurch gekennzeichnet, dass** das gefärbte Garn einen Garntiter aufweist, der gleich oder kleiner als 76 ist.

3. Verfahren nach Anspruch 2, **dadurch gekennzeichnet, dass** der Garntiter größer als 50 ist.

4. Verfahren nach einem der Ansprüche 1 bis 3, **dadurch gekennzeichnet, dass** das Gewirke oder Gestricke ein Gewicht von 80-120 g pro Quadratmeter aufweist.

5. Verfahren nach einem der Ansprüche 1 bis 4, **dadurch gekennzeichnet, dass** zur Herstellung eines Fahrzeughimmels das fixierte Gestricke oder Gewirke (Schritt 3') durch Flammkaschieren mit einem farbangepaßten Schaum verbunden wird (Schritt 4') und dass die erzeugte Flammkaschierung auf einem Formhimmel aufkaschiert wird (Schritt 5').

6. Verfahren nach Anspruch 5, **dadurch gekennzeichnet, dass** der Farbumschlag nach dem Aufkaschieren (Schritt 5') ermittelt wird.

7. Verfahren nach einem der Ansprüche 1 bis 4, **dadurch gekennzeichnet, dass** zur Verkleidung einer Fahrzeugsäule oder dergleichen das fixierte Gewirke oder Gestricke (Schritt 30') durch Klebekaschieren mit einem farbangepaßtem Vlies verbunden wird (Schritt 40') und dass die Klebekaschierung mit Kunststoff hinterspritzt wird (Schritt 50').

8. Verfahren nach Anspruch 7, **dadurch gekennzeichnet, dass** der Farbumschlag nach der Hinterspritzung (Schritt 50') ermittelt wird.

9. Verfahren nach Anspruch 7 oder 8, **dadurch gekennzeichnet, dass** die Hinterspritzung mit ABS-PCoder PP-Kunststoff erfolgt (Schritt 50')

10. Verfahren nach einem der Ansprüche 1 bis 4, **dadurch gekennzeichnet, dass** zur Herstellung einer Hutablage oder dergleichen nach dem Fixieren (Schritt 300') das Gewirke oder Gestricke auf einem Bauteil verpreßt wird (Schritt 400').

11. Verfahren nach Anspruch 10, **dadurch gekennzeichnet, dass** der Farbumschlag nach dem Verpressen auf einem Bauteil (Schritt 400') ermittelt wird.

## Claims

1. A method for manufacturing a lining material for motor vehicles, in which from an already spun-dyed yarn (step 1') a knitted fabric is produced (step 2'), the knitted fabric is fixed (step 3') and the fixed knitted fabric is disposed on a substrate (step 4'),
**characterised in that** subsequently any change in colour is determined and is compensated by varying the colouration during the yarn manufacture (step 10').

2. A method according to Claim 1,
**characterised in that** the dyed yarn comprises a yarn count which is equal to or less than 76.

3. A method according to Claim 2,
**characterised in that** the yarn count is greater than 50.

4. A method according to one of Claims 1 to 3,
**characterised in that** the knitted fabric comprises a weight of 80 - 120 g per square metre.

5. A method according to one of Claims 1 to 4,
**characterised in that** to manufacture a roof lining the fixed knitted fabric (step 3') is connected by flame bonding to a colour-matched foam (step 4')
**and in that** the produced flame bonding is bonded to a ceiling (step 5').

6. A method according to Claim 5,
**characterised in that** the change of colour is determined after bonding (step 5').

7. A method according to one of Claims 1 to 4,
**characterised in that** for lining a vehicle column or the like the fixed knitted fabric (step 30') is connected by adhesive lamination to a colour-matched non-woven fabric (step 40')
and **in that** the adhesive lamination is back-moulded with plastic (step 50').

8. A method according to Claim 7,
**characterised in that** the change of colour is determined after the back-moulding (step 50').

9. A method according to Claim 7 or 8,
**characterised in that** the back-moulding takes place with ABS-PC or PP plastic (step 50').

10. A method according to one of Claims 1 to 4,
**characterised in that** to manufacture a rear parcel shelf or the like after fixing (step 300') the knitted fabric is pressed on a component (step 400').

11. A method according to Claim 10,
**characterised in that** the change of colour is determined after pressing on a component (step 400').

## Revendications

1. Procédé de fabrication d'un matériau d'habillage pour automobiles, selon lequel on fabrique à partir d'un fil teinté dans la masse (étape 1') un tissu à mailles (étape 2'), on fixe le tissu à mailles (étape 3') et on dispose ledit tissu à mailles sur un fond-support (étape 4), **caractérisé par le fait qu'**on détermine ensuite le changement de couleur intervenu et on le compense en modifiant l'apport de couleur lors de la fabrication du fil (étape 10').

2. Procédé selon la revendication 1, **caractérisé par le fait que** le fil teinté présente un titre de fil qui est égal ou inférieur à 76.

3. Procédé selon la revendication 2, **caractérisé par le fait que** le titre de fil est supérieur à 50.

4. Procédé selon une des revendications 1 à 3, **caractérisé par le fait que** le tissu à mailles présente un poids de 80-120 g par mètre carré.

5. Procédé selon une des revendications 1 à 4, **caractérisé par le fait que** pour fabriquer une garniture de plafond de véhicule on lie le tissu à mailles fixé (étape 3') à une mousse de couleur adaptée par placage à la flamme (étape 4') et on applique le produit plaqué à la flamme sur un plafond moulé (étape 5').

6. Procédé selon la revendication 5, **caractérisé par le fait qu'**on détermine le changement de couleur intervenu après l'opération de placage.

7. Procédé selon une des revendications 1 à 4, **caractérisé par le fait que** pour l'habillage d'un montant de véhicule ou similaire, on lie le tissu à mailles fixé (étape 30') à un feutre de couleur adaptée par contre-collage (étape 4') et on injecte une matière plastique derrière le produit contre-collé.

8. Procédé selon la revendication 7, **caractérisé par le fait qu'**on détermine le changement de couleur intervenu après l'opération de contre-collage (étape 50').

9. Procédé selon la revendication 7 ou 8, **caractérisé par le fait que** l'injection est réalisée avec une matière plastique de type ABS-PC ou PP.

10. Procédé selon une des revendications 1 à 4, **caractérisé par le fait que** pour fabriquer une plage arrière de véhicule ou similaire, après fixage (étape 300'), on presse le tissu à mailles sur un composant (étape 400').

11. Procédé selon la revendication 7, **caractérisé par le fait qu'**on détermine le changement de couleur intervenu après l'opération de pressage (étape 400') sur un composant.
